# EUROPEAN PATENT SPECIFICATION

(11) **EP 2 868 194 B1**
(45) Date of publication and mention of the grant of the patent: **14.09.2016**
(21) Application number: 13191010.1
(22) Date of filing: 31.10.2013
(51) Int. Cl.: A01M 1/18, A01G 7/06, A01G 13/00, A01G 13/10

(54) **System and method for coating plant seedlings**
System und Verfahren zur Beschichtung von Pflanzensetzlingen
Système et procédé pour revêtir des semis de plantes

(43) Date of publication of application: 06.05.2015
(73) Proprietor: Åssi Plantskydd AB, 311 62 Ullared (SE)
(72) Inventor: Wirth, Silvio, 311 62 Ullared (SE)
(74) Representative: Persson, Albin

(56) References cited:
- WO-A1-95/32620
- WO-A1-2013/030771
- DE-A1- 19 741 956

## Description

### FIELD OF THE INVENTION

The invention relates to a system and a method for coating plant seedlings. More specifically, the present invention relates to a system and a method for coating at least a portion of a plant seedling stem. Plant seedling stems are often coated with a protective coating, such as wax, paraffin or similar, to protect the plant seedlings from insects.

Generally forest management includes clear-cutting of an area and planting seedlings in the clear-cut area. If such seedlings are not protected against insects the seedlings can be damaged or even killed by the insects. For example, conifer seedlings, such as fir, pine, larch, etc., are often damaged by the pine weevil (*Hylobius abietis*). Coating the plant seedlings with a protective coating forming a physical barrier has proven to be an efficient and environmentally friendly manner of protecting the seedlings against damages by such insects. Often bare-root seedlings are coated in this way.

### PRIOR ART

There are different methods and systems for coating plant seedlings in the prior art. According to one prior art method seedlings are lowered into open top receptacles with liquid coating substance, after which the coated seedlings are put on a drying stand where the coating solidifies and forms a protecting barrier. Then, the coated seedlings can be counted, bundled and packed in a suitable manner. Such prior art receptacles can be arranged so that a continuous upwards flow of the liquid coating substance in the receptacles is obtained, e.g. by means of a conventional pump which pumps the liquid out through an orifice in the bottom of the receptacle. The excess liquid flows over the edges of the receptacles and is collected in a tub or similar. The excess liquid is then circulated back to the pump to be circulated back to the receptacles.

A problem with such methods and systems for coating plant seedlings according to prior art is that the coating process is expensive. Hence, there is a need for a cost efficient system and method for coating plant seedlings. Another problem with prior art systems and methods is that the consumption of coating substance is high and that the coating is inaccurate, which results in high cost and which can result in damaged plants.

### SUMMARY OF THE INVENTION

An object of the present invention is to avoid the problem of the prior art and provide a cost efficient and more accurate system and method for coating plant seedlings. The system according to the invention results in an accurate and automatic or semi-automatic system with a relatively low investment cost.

The present invention relates to a system for coating at least a portion of a plant seedling stem with a coating substance, comprising a plurality of spaced apart containers for the coating substance, characterised in that the system comprises an industrial robot with an end effector comprising a support with a plurality of spaced apart grippers for gripping a plurality of spaced apart plant seedlings, that the system comprises a seedling stem aligning device for positioning the seedling stems to be gripped in a common plane, and that the end effector with the grippers is movable between a picking position, a coating position and a discharge position. By means of the industrial robot with the grippers and the stem aligning device an efficient, cost effective and accurate coating of the seedlings is obtained without extreme investments, wherein an attractive solution for coating seedlings is obtained. The stem aligning device arranging the stems in a common plane results in a reliable gripping and evenly distributed coating of the stems by dipping in the containers. Further, the system according to the invention can be mobile, wherein the system temporarily can be placed at seedling plantation sites. The seedlings to be coated can be conifer seedlings or other types of seedlings. The seedlings can be bare-root seedlings.

The stem aligning device can comprise a bar arranged in parallel to the support and between a free end of the grippers and a base end of the grippers to be able to push the seedling stems towards a seedling support surface to a predetermined position. Hence, a simple and reliable way of arranging the stems in a common plane is obtained. The stem aligning device can be adjustable, wherein a distance from the free end of the grippers can be set to adapt the stem aligning device to seedlings of different sizes.

The end effector can be provided with nozzles for air or similar to speed up solidification of the coating on the stems and facilitate further handling thereof. This also results in reduced dripping of coating substance during transport to the discharge position and more efficient use of the coating substance.

The system can comprise a conveyor for feeding seedlings to the picking position. The conveyor can be provided with spaced apart compartments for the seedlings, wherein a single seedling can be placed in each compartment. A distance between the compartments can correspond to a distance between the grippers and a distance between the containers for coating substance, wherein the distance between the seedlings is predetermined throughout the picking and coating process. Hence, a simple structure for handling the seedlings throughout different steps of the coating process is obtained.

The containers can be elongated and arranged with an open top, so that seedling stems easily can be dipped therein. Hence, the containers are adapted to the form of the part of the seedlings to be coated, which results in a more accurate coating and reduces the amount of coating substance on the seedling branches. The containers can be provided with flexible sealing elements at the ends, which sealing elements can be provided with a cut for receiving a portion of a seedling. Hence, seedling stems can be pushed into the cuts, so that the part of the stem is lowered into the container, while the sealing element prevents coating substance from unintentionally leaving the containers. This makes it possible to obtain a higher level of coating substance in the containers and results in a more efficient coating of the seedlings.

The containers can be arranged in a reservoir for coating substance, which reservoir can be connected to a pump for pumping liquid coating substance from the reservoir, through a feeding pipe to the containers and out through an opening of said containers to provide an upwards flow of liquid coating substance. The upwards flow in the containers can be adjustable. The pump can be connected to a return pipe for circulating a part of the coating substance back into the reservoir for mixing the content therein. Hence, the coating substance is mixed in an easy and reliable way without additional moving parts. Further, said mixing of the coating substance also mixes dirt from the seedlings present in the reservoir into the coating substance, wherein the coating substance containing the dirt is pumped to the containers and applied to the seedlings, which results in an effective removal of dirt from the reservoir.

The invention also relates to a method for coating at least a portion of a plant seedling stem, comprising the steps of
a) moving grippers of an end effector of an industrial robot to a picking position for picking plant seedlings,
b) automatically positioning the stems in a common plane by means of a seedling stem aligning device,
c) gripping a plurality of spaced apart seedlings by means of said grippers,
d) moving the grippers to a coating position and positioning the portion of the seedlings to be coated in a liquid coating substance in spaced apart containers containing said coating substance and thereby coating the portion of the seedlings to be coated, and
e) moving the grippers to a discharge position and discharging the coated seedlings.

Further characteristics and advantages of the present invention will become apparent from the description of the embodiments below, the appended drawings and the dependent claims.

### SHORT DESCRIPTION OF THE DRAWINGS

The invention will now be described more in detail with the aid of embodiments and with reference to the appended drawings, in which
Fig. 1 is a schematic perspective view of a part of a system for coating plant seedlings according to one embodiment, showing an industrial robot having an end effector with grippers,
Fig. 2 is a schematic perspective view of the end effector according to Fig. 1,
Fig. 3 is a schematic view from above of an end effector according to one embodiment,
Figs. 4-11 is a series of schematic views showing coating of plant seedlings according to one embodiment,
Fig. 12 is a schematic side view of a set of containers for coating substance according to one embodiment,
Fig. 13 is a schematic view from above of the containers according to Fig. 12,
Fig. 14 is a schematic side view of a set of containers for coating substance according to one alternative embodiment,
Fig. 15 is a schematic side view of a set of containers for coating substance according to one alternative embodiment,
Fig. 16 is a schematic view from above of the containers according to Fig. 15,

### THE INVENTION

Referring to the drawings a system and a method for coating plant seedlings with a coating substance is disclosed. In the drawings different parts of said coating system and different steps of said coating method are illustrated and described below.

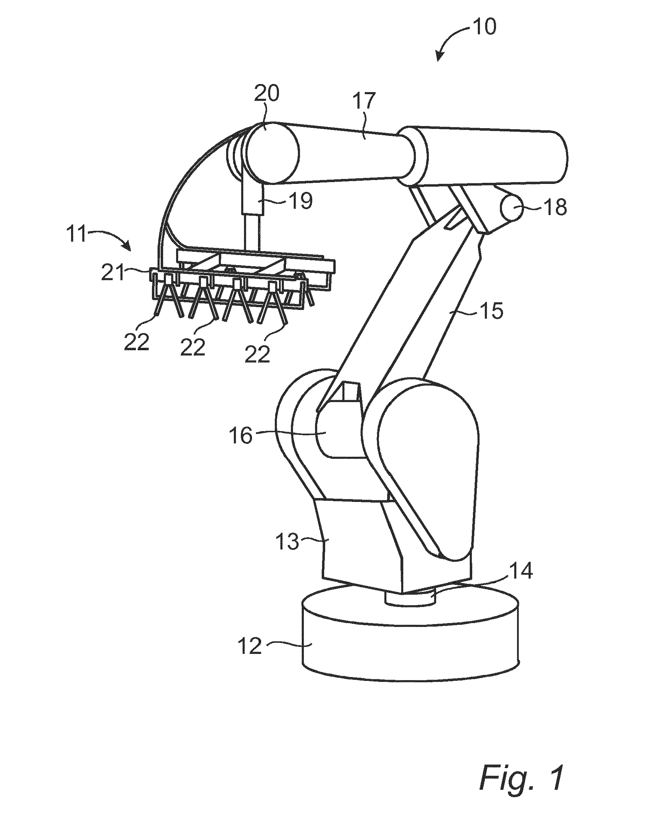

Referring to Fig. 1 an industrial robot 10 having an end effector 11 for picking plant seedlings, coating them with a coating substance and discharging the coated plant seedlings is illustrated schematically. For example, the industrial robot 10 is an articulated robot having a plurality of rotary joints, such as a so called pick and place robot. In the illustrated embodiment the industrial robot 10 comprises a base portion 12 connected to a rotating portion 13 through a rotary joint 14. The rotating portion 13 is connected to a first arm 15 through a first articulated joint 16. The first arm 15 is connected to a second arm 17 through a second articulated joint 18. The second arm 17 is connected to a third arm 19 through a third articulated joint 20. The third arm 19 is connected to the end effector 11. The base portion 13 and the arms 15, 17, 19 are driven by motors, such as electric, hydraulic or pneumatic motors, and are programmable, wherein the end effector is movable in the space around the industrial robot 10 in any desired way. Of course, other designs of industrial robots can be used.

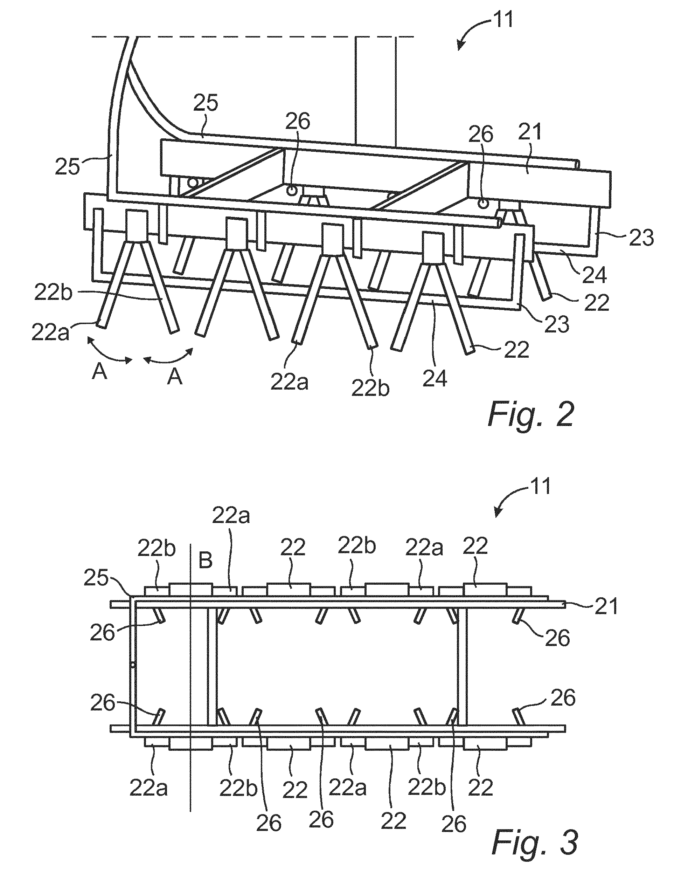

With reference also to Figs. 2 and 3 the end effector 11 comprises a support 21 with a plurality of spaced apart grippers 22 for gripping plant seedlings. The grippers 22 project from the support 21 for enclosing and gripping a part of the plant seedlings, such as a part of the stem. For example, the grippers 22 project downwards. In the illustrated embodiments the grippers 22 comprise a first gripping arm 22a and a second gripping arm 22b, which are connected to the support 21 and are motorized for gripping action, wherein the grippers 22 are movable between an open position and a closed position. In Figs. 1-3 the grippers 22 are in the open position. For example a base end of the gripping arms 22a, 22b is connected to the support 21 through an articulated joint, wherein an opposite free end of the gripping arms 22a, 22b is movable around the articulated joint so that the gripping arms 22a, 22b are movable towards each other and away from each other, which is illustrated by means of the arrows A in Fig. 2. Alternatively, the gripping arms 22a, 22b are arranged for linear relative movement for increasing or reducing a distance between them.

In the illustrated embodiments, the grippers 22 are arranged in a first row and a second row, wherein the second row is arranged at a distance from and in parallel to the first row to form aligned pairs of grippers 22 for gripping at a first and second position on the plant seedlings, such as at a low end of the stem and at a high end of the stem. For example, the grippers 22 are arranged for gripping the stem at a first and second position leaving there between the part of the stem to be coated with coating substance. Hence, the grippers 22 in the first row are arranged for gripping a part of the stem adjacent the roots and adjacent a low end of the part to be coated, wherein the grippers 22 in the second row are arranged for gripping a part of the stem at the opposite end of the stem and adjacent a high end of the part to be coated. According to one embodiment, the distance between the first and second rows of grippers 22 is adjustable.

In the illustrated embodiments the end effector 11 comprises a seedling stem aligning device 23 for positioning the seedling stems in a common plane. Alternatively, the seedling stem aligning device 23 is arranged on a conveyor feeding seedlings to a seedling picking position for picking by the industrial robot 10 with the end effector 11. With reference to Figs. 1 and 2 the seedling stem aligning device 23 comprises a bar 24 connected to the support 21 to engage and push down the part of the seedling stems adjacent the gripping position to a common level. The bar 24 is connected to the support 21 and extends in a plane parallel to the support 21 and substantially perpendicular to the grippers 22. Hence, the bar 24 extends along the row of grippers 22. Alternatively, the seedling stem aligning device 23 comprises a plurality of shorter bars arranged at each of the grippers 22. For example, the bar 24 is suspended from the support 21. The bar 24 is arranged at a distance from the free end of the gripping arms 22a, 22b between the free end and the base end thereof.

In the illustrated embodiment the end effector 11 is provided with conduits 25 with nozzles 26 for supplying a fluid, such as a cooling fluid, to the coated seedlings while being held by the grippers 22. For example, the conduits 25 and nozzles 26 are arranged for spraying the coated part of the seedlings with a cooling fluid, such as air or water, for reducing the time for the coating to solidify. The conduits 25 extend, for example, along the support 21 and along one or both of the rows of grippers 22, wherein the nozzles 26 are directed towards an area between the first and second rows of grippers 22. For example, a nozzle 26 is arranged on both sides of each gripper 22 and is inclined towards an imaginary line B between the pairs of grippers 22 of the first and second rows, as illustrated in Fig. 3.

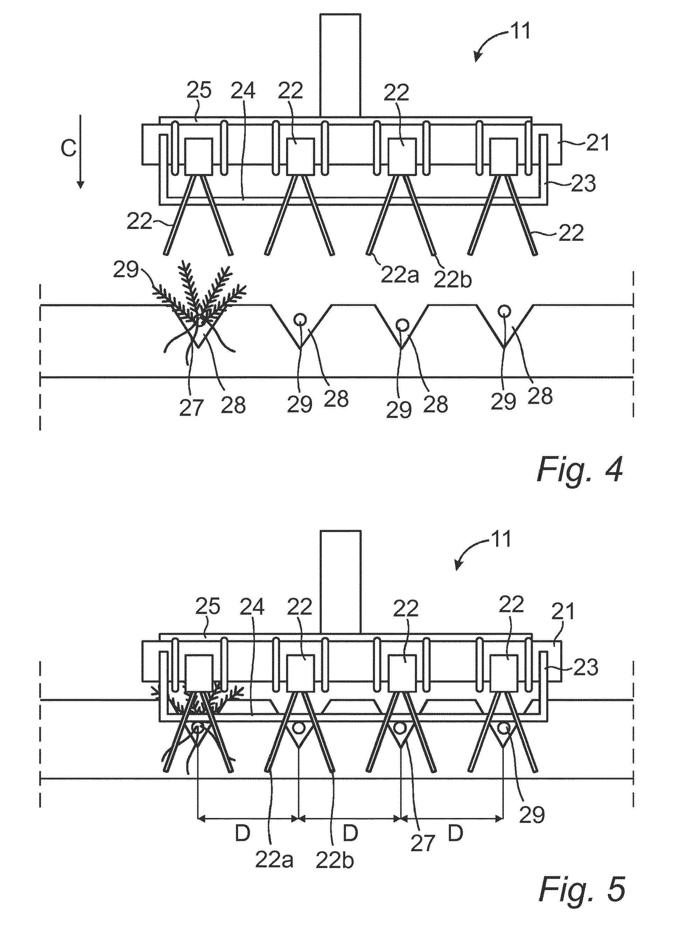

With reference to Figs. 4-11 a coating process is illustrated schematically. In Fig. 4 the end effector 11 is positioned above a seedling support surface 27, such as tray or conveyor, having spaced apart compartments 28 for individual seedlings 29. The seedling 29 to the left in the drawings is illustrated with roots and branches. The other seedlings 29 are illustrated with a circle representing the stem. Due to different stem and branch configurations of individual seedlings 29 the stems are arranged at different levels. For engaging the seedlings 29 the end effector 11 is moved downwards, which is illustrated by means of the arrow C in Fig. 4. During lowering of the end effector 11 to the picking position as illustrated in Fig. 5, the bar 24 of the stem aligning device 23 engages the stem, for example at a position next to the grippers 22 both at the first and second rows of grippers 22, and pushes the stems downwards to a position wherein the stems of the seedlings 29 are arranged in a common plane, such as a common horizontal plane, so that the stems are arranged at the same level for subsequent picking and also for subsequent dipping in coating substance. For example the grippers 22 and the bar 25 are lowered into a position next to the compartments 28, so that the grippers 22 and the bar 25 are arranged outside the compartments 28. The distance D between the centres of two adjacent compartments28 corresponds to the distance between the centres of two adjacent grippers 22. For example, the compartments 28 are arranged with inclined walls so that the compartments 28 are tapered downwards.

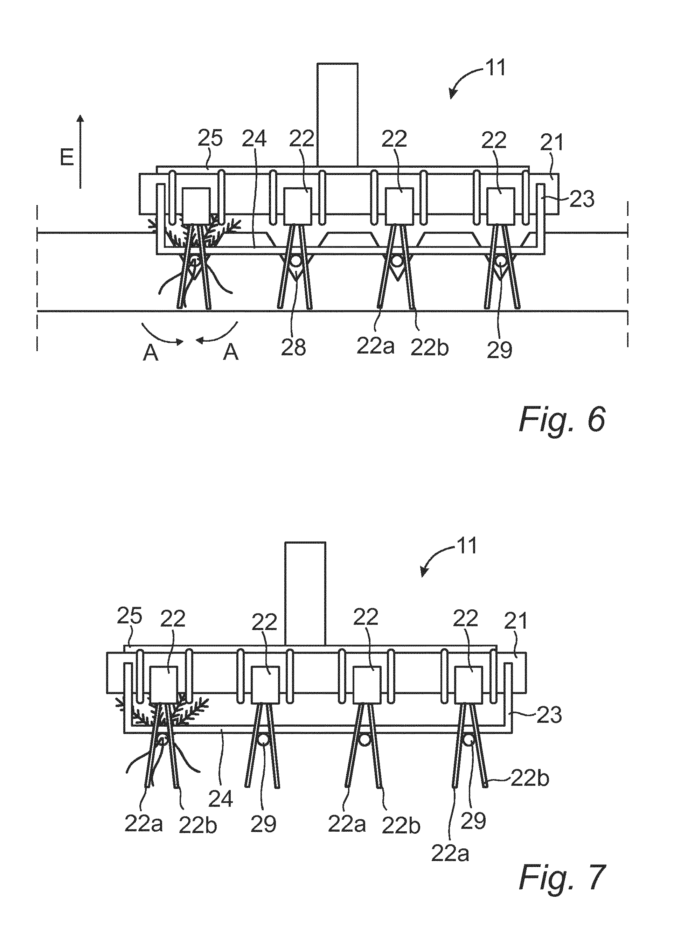

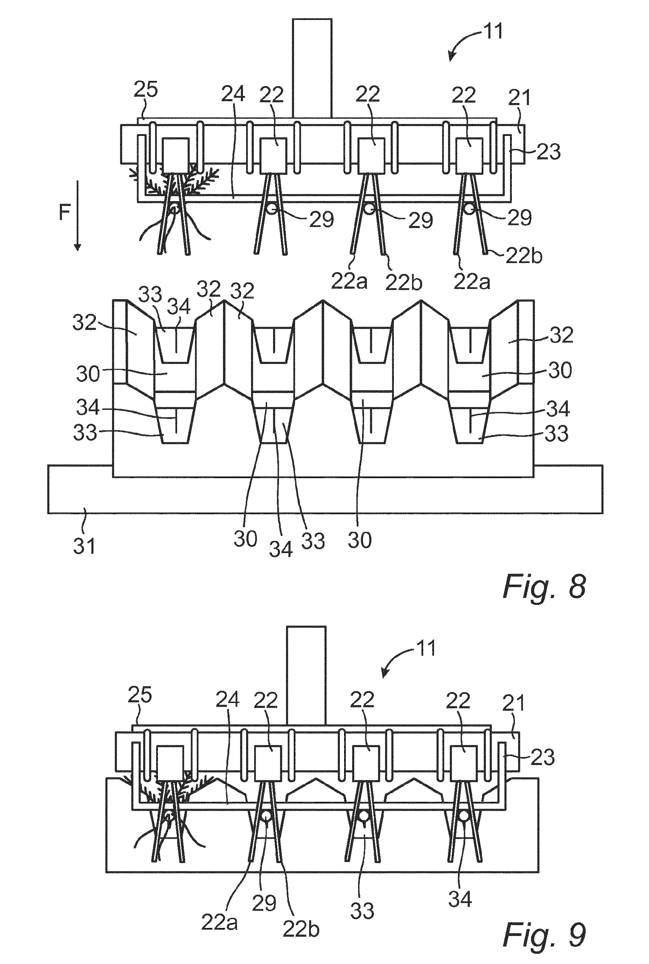

After aligning the stems the gripping arms 22a, 22b are brought towards each other as illustrated by means of the arrows A in Fig. 6, so that the grippers 22 grip the stems. Then the end effector 11 is moved while picking up the seedlings 29, which is illustrated by means of the arrow E in Fig. 6. By means of the industrial robot 10 the seedlings 29 are moved from the picking position while being carried by the grippers 22, which is illustrated in Fig. 7. The seedlings 29 are moved to a position above a set of containers 30 for coating substance, which containers 30 are illustrated schematically according to one embodiment in the perspective view in Fig. 8, wherein the seedlings 29 are lowered into the containers 30 as illustrated by means of the arrow F to the coating position as illustrated in Fig. 9.

The containers 30 are arranged for receiving the part of the stem to be coated. The containers 30 are elongated and spaced apart. The distances between the centre lines of the containers 30 correspond to the distances between the centre lines of the grippers 22. Hence, the distance between the grippers 22 correspond to the distance between the containers 30 and also the distance between the compartments 28 of the seedling support surface 27 at the picking position. The containers 30 are formed with an open top, so that the part of the stems to be coated can be lowered into the containers 30. The containers 30 are, for example, arranged in a reservoir 31 for coating substance, wherein excess coating substance is collected in the reservoir 31 and circulated back to the containers 30, which is described in more detail below.

According to the embodiment of Figs. 8 and 9, the containers 30 are provided with inclined surfaces 32 on both long sides at the open top to keep the branches of the seedlings away from the coating substance in the containers 30. For example, the containers 30 and the inclined surfaces 32 are formed in sheet metal or any other suitable sheet material. For example, the containers 30 are tapered downwards, so that the open top is wider than the bottom. The ends of the containers 30 in the longitudinal direction are provided with a flexible sealing element 33 having a cut 34. The sealing elements 33 are arranged at each of the opposite two ends of the containers 30. The sealing elements 33 are arranged to enable a higher level of coating substance inside the containers 30 and prevent the coating substance from leaving the containers 30 until the top of the sealing element 33 is reached. The cut 34 is arranged for receiving portions of the seedling stem, so that the seedling stem can be lowered into the container 30 while parts of the stem are pushed into the cuts 34. The sealing element 33 is arranged for sealing around a stem being pushed into the cut 34 to prevent, at least partially, coating substance from leaving the container 30 at a level below the top of the sealing element 33 when a stem extends through the cut 34. For example, the flexible sealing element 33 is a rubber sheet or similar. The sealing element 33 is, for example, exchangeable and replaceable due to wear or dimension requirements for different seedling sizes.

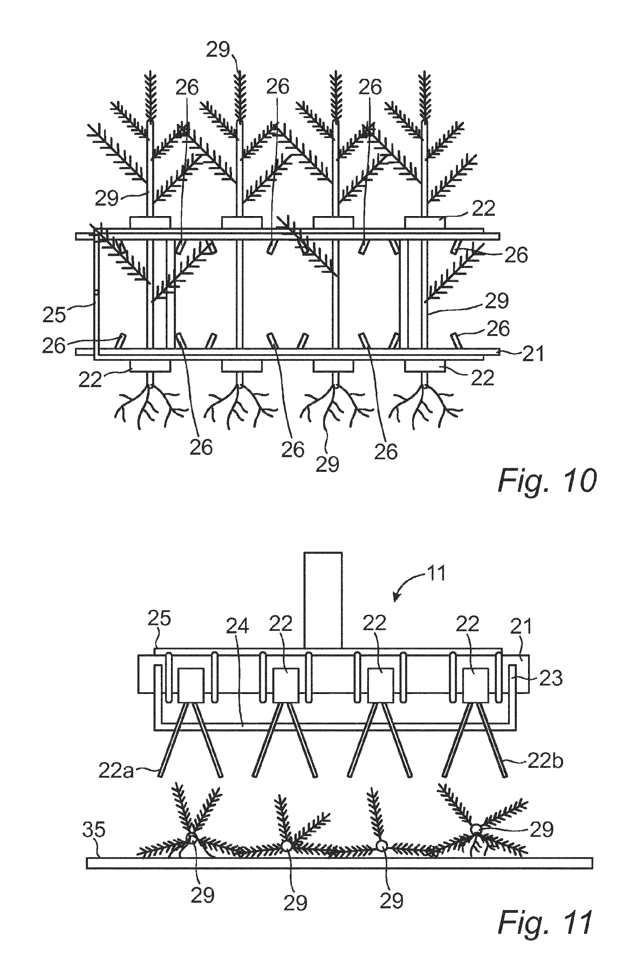

After dipping the part of the stem to be coated in the coating substance as illustrated in Fig. 9 the seedlings 29 are lifted up from the containers 30. Then, as illustrated in Fig. 10, air is blown through the nozzles 26 onto the coating on the seedlings 29 to cool the coating and solidify the coating rapidly. Alternatively, water is sprayed onto the coating for cooling thereof. By means of the robot 10 the coated seedlings 29 are moved to a discharge position. For example, air is blown through the nozzles 26 during transport of the seedlings 29 to the discharge position. In the discharge position the grippers 22 are moved to their open position for releasing the coated seedlings 29 and placing them on a discharge surface 35, which is illustrated in Fig. 11. For example, the discharge surface 35 is a conveyor, a tray, a box or similar. In the illustrated embodiment the gripping arms 22a, 22b are moved away from each other for releasing the coated seedlings 29. For example, the gripping arms 22a, 22b are rotated around their base ends to increase the distance between their free ends. The coated seedlings 29 are then subject to further treatment, such as counting, bundling, packaging and transport. After discharging the coated seedlings 29 the robot 10 can return to the picking position and start another cycle of picking, coating and discharging seedlings. According to one embodiment, the robot 10 is programmed to execute a predetermined number of cycles of picking, coating and discharging seedlings, after which the robot 10 is programmed to take the end effector 11 to a coating substance removal position, wherein coating substance is removed from the grippers 22. For example, the grippers 22 are lowered into hot water to clear the grippers 22 from solidified coating substance.

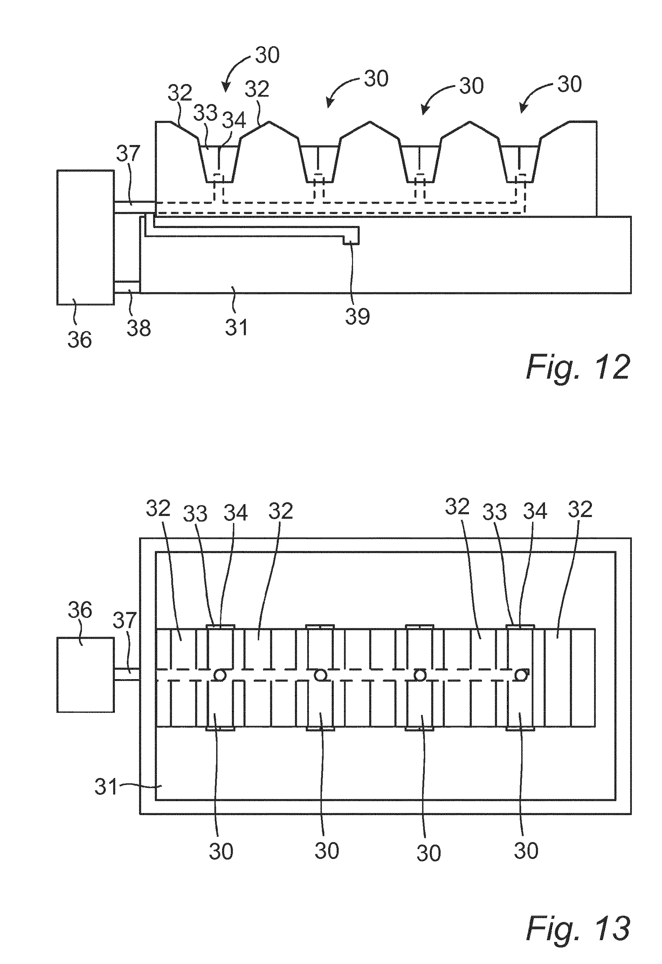

With reference to Figs. 12 and 13 a reservoir 31 with containers 30 is illustrated according to one embodiment, wherein the containers 30 are positioned within the periphery of the reservoir 31. In the illustrated embodiment four containers 30 are arranged in the reservoir 31. However, any number of containers 30 can be used, such as 1-20, 2-15 or 4-12. A pump 36 is arranged for pumping coating substance, such as a liquid coating substance in the form of heated wax or similar, to the container 30. For example, the pump 36 is arranged for pumping coating substance from the reservoir 31 to the containers 30, wherein excess coating substance from the containers 30 and coating substance dripping off from the coated seedlings are circulated back to the containers 30 by means of the pump 36. The pump 36 is connected to the containers 30 through a feeding conduit 37, which feeding conduit partially is illustrated by means of broken lines in Figs. 12 and 13. The feeding conduit 37 is connected to the containers 30 to provide an upwards flow of coating substance in the containers 30. For example, the feeding conduit 37 is connected to the bottom of the containers 30 for feeding coating substance to the containers 30 and continuously filling the containers 30 with coating substance. Excess coating substance flows over the top edge of the containers 30, such as at the ends thereof, which is at the sealing elements 33 in the embodiment of Figs. 12 and 13. The pump 36 is connected to a circulating conduit 38 for pumping coating substance from the reservoir 31 to the feeding conduit 37.

The containers 30 are elongated and, for example, arranged with a length of 10-30 cm, 15-20 cm or 17 cm forming the distance between the ends which are constituted by the sealing elements 33 in the embodiment of Figs. 12 and 13. The containers 30 are, for example, arranged with a width in the open top thereof, i.e. between the inclined surfaces 32 in the embodiment of Figs. 12 and 13, of 2-6 cm, 3-5 cm or 3.5-4.5 cm. For example, the open top of the containers 30 are rectangular.

The reservoir 31 is, for example, a box having walls with heating elements for heating the coating substance to liquid phase. For example, the reservoir 31 is electrically heated. Alternatively, the reservoir walls comprise tubes for conducting a heated fluid, such as water, for heating the coating substance in the reservoir 31. For example the reservoir 31 is arranged for heating the coating substance to 70-100, 80-90 or 82 degrees Celsius. According to the embodiment of Figs. 12 1 nd 13 the feeding conduit 37 is provided with a return nozzle 39 for circulating a part of the coating substance back into the reservoir 31 while mixing the coating substance in the reservoir 31. According to one embodiment, which is not illustrated, the bottom of the reservoir 31 is inclined towards a centre line of the bottom for collecting the coating substance in the middle of the reservoir 31 and leading it towards the circulating conduit 38.

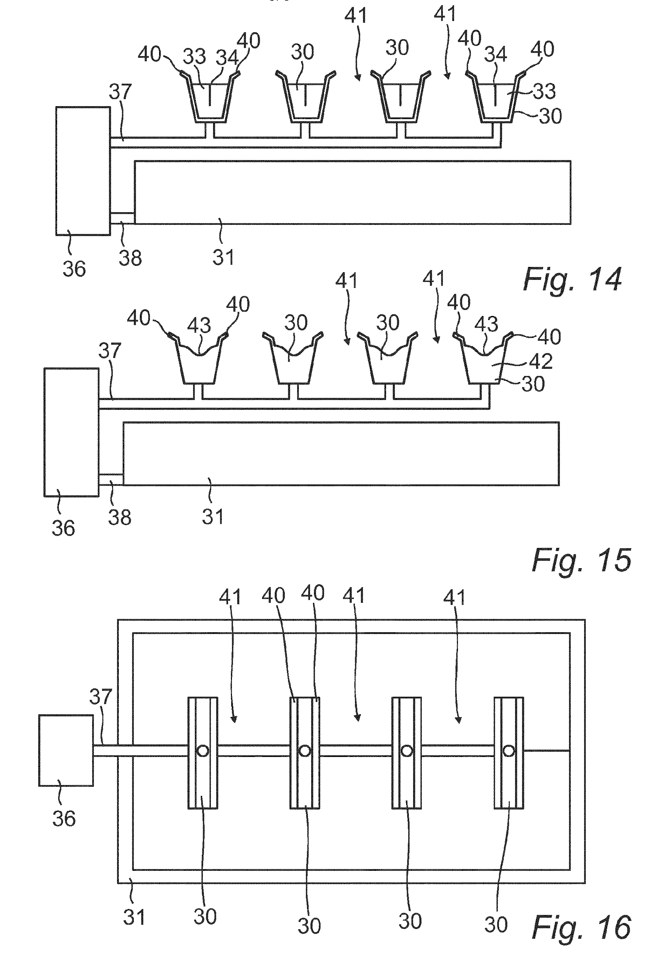

With reference to Fig. 14 an alternative embodiment of the containers 30 is illustrated, wherein the containers 30 are formed with flanges 40 on both long sides at the open top to keep the branches of the seedlings away from the coating substance in the containers 30 during dipping of the stems therein. The flanges 40 are inclined outwards. A gap 41 is arranged between the flanges 40 of containers 30 arranged next to each other, so that coating substance dripping from coated seedlings can drop back into the reservoir 31. The containers 30 are provided with the sealing elements 33 with the cut 34 as described above.

With reference to Figs. 15 and 16 another alternative embodiment of the containers 30 is illustrated, wherein the containers 30 are provided with the flanges 40 and the gaps 41. Further, containers 30 are formed with end walls 42 having a recess 43 extending from the top of the end walls 42 and downwards for receiving a part of the seedling stem, so that the part of the seedling stem to be coated can be positioned in the containers 30 between the recesses 43 of opposite end walls 42. Excess coating substance flows out of the containers 30 through the recesses 43.

## Claims

1. A system for coating at least a portion of a plant seedling stem with a coating substance, comprising a plurality of spaced apart containers (30) for the coating substance, ***characterised* in**
**that** the system comprises an industrial robot (10) with an end effector (11) comprising a support (21) with a plurality of spaced apart grippers (22) for gripping a plurality of spaced apart plant seedlings (29),
**that** the system comprises a seedling stem aligning device (23) for positioning the seedling stems to be gripped in a common plane, and
**that** the end effector (11) with the grippers (22) is movable between a picking position, a coating position and a discharge position.

2. A system according to claim 1, wherein the stem aligning device (23) comprises a bar (24) arranged in parallel to the support (21) and between a free end of the grippers (22) and a base end of the grippers (22) to be able to push the seedling stems towards a seedling support surface (27) to a predetermined position.

3. A system according to claim 1 or 2, wherein the stem aligning device (23) is adjustable.

4. A system according to any of the preceding claims, wherein nozzles (26) for supplying a cooling fluid, such as air, to the coated seedlings is arranged on the support (21).

5. A system according to any of the preceding claims, comprising a conveyor for feeding seedlings to the picking position, said conveyor being provided with a plurality of spaced apart compartments (28), wherein each compartment (28) is arranged for receiving at least a part of the seedling stem.

6. A system according to claim 5, wherein a distance between centre lines of the compartments (28) correspond to a distance between centre lines of the grippers (22) and a distance between centre lines of the containers (30) for coating substance.

7. A system according to any of the preceding claims, wherein the containers (30) for coating substance are elongated and arranged with an open top for receiving a portion of the stem to be coated, wherein, at each of the ends of the containers (30), there is provided a flexible sealing element (33) having a cut (34) for receiving a portion of the seedling.

8. A system according to claim 7, wherein the containers (30) are arranged in a reservoir (31) for coating substance, which reservoir (31) is connected to a pump (36) for pumping liquid coating substance from the reservoir (31), through a feeding conduit (37) to the containers (30) and out through an opening of said containers (30) to provide an upwards flow of liquid coating substance.

9. A system according to claim 8, wherein the pump (36) is connected to a return nozzle (39) for circulating a part of the coating substance back into the reservoir (31) for mixing the content therein.

10. A system according to any of the preceding claims, wherein the end effector (11) comprises a first row of grippers (22) and second row of grippers (22), wherein the first row of grippers (22) is arranged at a distance from the second row and in parallel thereto, so that the grippers (22) of the first and second rows are aligned with each other for gripping a seedling at each of the ends of the portion to be coated.

11. A method for coating at least a portion of a plant seedling stem, comprising the steps of
a) moving grippers (22) of an end effector (11) of an industrial robot (10) to a picking position for picking plant seedlings (29),
b) automatically positioning the stems in a common plane by means of a seedling stem aligning device (23),
c) gripping a plurality of spaced apart seedlings (29) by means of said grippers (22),
d) moving the grippers (22) to a coating position and positioning the portion of the seedlings to be coated in a liquid coating substance in spaced apart containers (30) containing said coating substance and thereby coating the portion of the seedlings to be coated, and
e) moving the grippers (22) to a discharge position and discharging the coated seedlings.

12. A method according to claim 11, comprising the steps of moving a bar (24) of the end effector (11) towards the seedlings (29) and by means of said bar (24) pushing the seedling stems towards a seedling support surface (27) to position the seedling stems in a common plane.

13. A method according to claim 11 or 12, comprising, after step d, the steps of conducting a cooling fluid through nozzles (26) of the end effector (11) and supplying the cooling fluid to the coated seedlings for cooling the coating.

14. A method according to any of claims 11-13, comprising the step of pushing a portion of the seedling into a cut (34) in a flexible sealing element (33) in the container (30).

15. A method according to any of claims 11-14, comprising the step of pumping liquid coating substance to the containers (30) to provide an upwards flow of said liquid in the containers (30).

## Patentansprüche

1. System zur Beschichtung mindestens eines Teils eines Pflanzensämlingsstängels mit einer Beschichtungssubstanz, umfassend eine Mehrzahl voneinander beabstandeter Behälter (39) für die Beschichtungssubstanz, **dadurch gekennzeichnet,**
• **dass** das System einen industriellen Roboter mit einem Greiforgan (11) aufweist (10), das eine Stütze (21) mit einer Mehrzahl voneinander beabstandeter Greifer (22) zum Greifen einer Mehrzahl voneinander beabstandeter Pflanzensämlinge (29) aufweist,
• **dass** das System eine Sämlingsstängel-Ausrichtungsvorrichtung (23) zum Positionieren der zu ergreifenden Sämlingsstängel in einer gemeinsamen Ebene aufweist,
• **dass** das Greiforgan (11) mit den Greifern (22) zwischen einer Pflückposition, einer Beschichtungsposition und einer Entladungssposition bewegbar ist.

2. System nach Anspruch 1, wobei die Stängel-Ausrichtungsvorrichtung (23) eine Stange (24) aufweist, die parallel zur Stütze (21) und zwischen einem freien Ende der Greifer (22) und einem Basisende der Greifer (22) angeordnet ist, um die Sämlingsstängel in Richtung einer Sämlingsunterstützungsoberfläche (27) in eine vorgegebenen Position schieben zu können.

3. System nach Anspruch 1 oder 2, wobei die Ausrichtungsvorrichtung (23) verstellbar ist.

4. System nach einem der vorherigen Ansprüche, wobei auf der Stütze (21) Düsen (26) zum Zuführen eines Kühlfluides, so wie Luft, zu den beschichteten Sämlingen angeordnet ist.

5. System nach einem der vorherigen Ansprüchen, umfassend ein Förderband, um die Sämlinge in die Pflückposition zuzuführen, wobei das Förderband mit einer Mehrzahl voneinander beabstandeter Fächer (28) versehen ist, wobei jedes Fach (28) derart angeordnet ist, zumindest einen Abschnitt des Sämlingsstängels aufzunehmen.

6. System nach Anspruch 5, wobei eine Distanz zwischen Zentrallinien der Fächer (28) einer Distanz zwischen Mittelinien der Greifer (22) und einer Distanz zwischen Mittelinien der Behälter (20) für die Beschichtungssubstanz entspricht.

7. System nach einem der vorherigen Ansprüche, wobei die Behälter (20) für Beschichtungssubstanz gestreckt sind und mit einem offenen Oberteil zum Aufnehmen eines Abschnitts des zu beschichtenden Stängels angeordnet sind, wobei an jedem Ende der Behälter (30) ein flexibles Dichtungselement (33) mit einem Schlitz (34) zum Aufnehmen eines Abschnitts des Sämlings vorgesehen ist.

8. System nach Anspruch 7, wobei die Behälter (30) in einem Vorratsbehälter (31) für die Beschichtungssubstanz angeordnet sind, der über eine Speiseleitung (37) zu den Behältern (30) und durch eine Öffnung der Behälter (30) hinaus mit einer Pumpe (26) zum Auspumpen der flüssigen Beschichtungssubstanz aus dem Vorratsbehälter (31) verbunden ist, um einen nach oben gerichteten Durchfluss flüssiger Beschichtungssubstanz bereitzustellen.

9. System nach Anspruch 8, wobei die Pumpe (36) mit einer Rückfließdüse (39) verbunden ist, um einen Teil der Beschichtungssubstanz zum Mischen seines Inhalts zurück in den Vorratsbehälter (31) zu zirkulieren.

10. System nach einem der vorherigen Ansprüche, wobei das Greiforgan (11) eine erste Greiferreihe und eine zweite Greiferreihe (22) aufweist, wobei die erste Greiferreihe (22) beabstandet zur zweiten Reihe und parallel dazu angeordnet ist, so dass die Greifer (22) der ersten und zweiten Greiferreihen zueinander zum Greifen eines Sämlings an beiden Ende der zu beschichtenden Abschnitte ausgerichtet sind.

11. Verfahren zum Beschichten mindestens eines Teiles eines Pflanzensämlingsstängels, aufweisend die folgenden Schritte:
a) Bringen von Greifern (22) eines Greiforgans (11) eines industriellen Roboters (11) in eine Pflückposition zum Pflücken von Pflanzensämlingen,
b) automatisches Positionieren der Sämlinge in eine gemeinsame Ebene mittels einer Sämlingsstängel-Ausrichtungsvorrichtung (23),
c) Greifen einer Mehrzahl beabstandeter Sämlingen (29) mittels der Greifer (22),
d) Bringen der Greifer (22) in eine Beschichtungsposition und Positionieren mit einer flüssigen Beschichtungssubstanz zu beschichtender Abschnitte der Sämlinge in voneinander beabstandete Behälter (30), die die Beschichtungssubstanz enthalten, wodurch die Abschnitte der zu beschichtenden Sämlinge beschichtet werden, und
e) Bringen der Greifer (22) in eine Entladungsposition und Entladen der beschichteten Sämlinge.

12. Verfahren nach Anspruch 11, umfassend die Schritte:
Bringen einer Stange des Greiforgans (11) zu den Sämlingen und Schieben der Sämlingsstängel zu einer Sämlingsunterstützungsfläche (27) mittels der Stange (24), um die Sämlingsstängel in eine gemeinsame Ebene zu positionieren.

13. Verfahren nach Anspruch 11 oder 12, umfassend nach Schritt d die Schritte:
Leiten eines Kühlfluides durch Düsen (26) des Greiforgans (11) und Zuführen des Kühlfluides zu den beschichteten Sämlingen zum Kühlen der Beschichtung.

14. Verfahren nach einem der Ansprüche 11 bis 13, umfassend den Schritt, dass ein Abschnitt des Sämlings in einen Schlitz (34) in einem flexiblen Dichtungselement (22) in dem Behälter (30) geschoben wird.

15. Verfahren nach einem der Ansprüche 11 bis 14, umfassend den Schritt, dass flüssige Beschichtungssubstanz zu den Behältern (30) gepumpt wird, um einen nach oben gerichteten Durchfluss der Flüssigkeit in den Behältern (30) bereitzustellen.

## Revendications

1. Système pour revêtir au moins une partie d'une tige de semis de plante avec une substance de revêtement, comprenant une pluralité de récipients espacés (30) prévus pour la substance de revêtement, **caractérisé**
**en ce que** le système comprend un robot industriel (10) avec un organe terminal effecteur (11) comprenant un support (21) avec une pluralité d'éléments de préhension espacés (22) destinés à saisir une pluralité de semis de plantes espacés (29),
**en ce que** le système comprend un dispositif d'alignement de tiges de semis (23) destiné à positionner les tiges de semis devant être saisies dans un plan commun, et
**en ce que** l'organe terminal effecteur (11) avec les éléments de préhension (22) peut être déplacé entre une position de prélèvement, une position de revêtement et une position d'évacuation.

2. Système selon la revendication 1, dans lequel le dispositif d'alignement de tiges (23) comprend une barre (24) agencée parallèlement au support (21) et entre une extrémité libre des éléments de préhension (22) et une extrémité de base des éléments de préhension (22) de manière à pouvoir pousser les tiges de semis en direction d'une surface de support de semis (27) jusqu'à une position prédéterminée.

3. Système selon la revendication 1 ou 2, dans lequel le dispositif d'alignement de tiges (23) est réglable.

4. Système selon l'une quelconque des revendications précédentes, dans lequel des buses (26) destinées à fournir un fluide de refroidissement, tel que de l'air, sur les semis revêtus sont agencées sur le support (21).

5. Système selon l'une quelconque des revendications précédentes, comprenant un convoyeur destiné à amener des semis vers la position de prélèvement, ledit convoyeur étant doté d'une pluralité de compartiments espacés (28), où chaque compartiment (28) est agencé de manière à recevoir au moins une partie de la tige de semis.

6. Système selon la revendication 5, dans lequel une distance entre les axes médians des compartiments (28) correspond à une distance entre les axes médians des éléments de préhension (22) et à une distance entre les axes médians des récipients (30) prévus pour une substance de revêtement.

7. Système selon l'une quelconque des revendications précédentes, dans lequel les récipients (30) prévus pour une substance de revêtement sont allongés et agencés avec un sommet ouvert afin de recevoir une partie de la tige devant être revêtue, où, au niveau de chacune des extrémités des récipients (30), il est prévu un élément d'étanchéité flexible (33) ayant une découpe (34) destinée à recevoir une partie du semis.

8. Système selon la revendication 7, dans lequel les récipients (30) sont agencés dans un réservoir (31) prévu pour une substance de revêtement, lequel réservoir (31) est relié à une pompe (36) destinée à pomper une substance de revêtement liquide à partir du réservoir (31), par l'intermédiaire d'une conduite d'alimentation (37) jusqu'aux récipients (30) et jusqu'à l'extérieur par l'intermédiaire d'une ouverture desdits récipients (30) afin de fournir un écoulement ascendant de substance de revêtement liquide.

9. Système selon la revendication 8, dans lequel la pompe (36) est reliée à une buse de retour (39) pour faire circuler une partie de la substance de revêtement en retour vers le réservoir (31) afin de mélanger le contenu en son sein.

10. Système selon l'une quelconque des revendications précédentes, dans lequel l'organe terminal effecteur (11) comprend une première rangée d'éléments de préhension (22) et une deuxième rangée d'éléments de préhension (22), où la première rangée d'éléments de préhension (22) est agencée à une certaine distance de la deuxième rangée et parallèlement à celle-ci, de sorte que les éléments de préhension (22) des première et deuxième rangées sont alignés les uns avec les autres afin de saisir un semis au niveau de chacune des extrémités de la partie devant être revêtue.

11. Procédé de revêtement d'au moins une partie d'une tige de semis de plante, comprenant les étapes
a) de déplacement des éléments de préhension (22) d'un organe terminal effecteur (11) d'un robot industriel (10) vers une position de prélèvement afin de prélever des semis de plantes (29),
b) de positionnement de manière automatique des tiges dans un plan commun au moyen d'un dispositif d'alignement de tiges de semis (23),
c) de saisie d'une pluralité de semis espacés (29) au moyen desdits éléments de préhension (22),
d) de déplacement des éléments de préhension (22) vers une position de revêtement et de positionnement de la partie des semis devant être revêtue dans une substance de revêtement liquide dans des récipients espacés (30) contenant ladite substance de revêtement et ainsi de revêtement de la partie des semis devant être revêtue, et
e) de déplacement des éléments de préhension (22) vers une position d'évacuation et d'évacuation des semis revêtus.

12. Procédé selon la revendication 11, comprenant les étapes de déplacement d'une barre (24) de l'organe terminal effecteur (11) en direction des semis (29) et, au moyen de ladite barre (24), de poussée des tiges de semis vers une surface de support de semis (27) afin de positionner les tiges de semis dans un plan commun.

13. Procédé selon la revendication 11 ou 12, comprenant, après l'étape d, les étapes d'acheminement d'un fluide de refroidissement par l'intermédiaire des buses (26) de l'organe terminal effecteur (11) et de fourniture du fluide de refroidissement aux semis revêtus afin de refroidir le revêtement.

14. Procédé selon l'une quelconque des revendications 11 à 13, comprenant l'étape de poussée d'une partie du semis dans une découpe (34) dans un élément d'étanchéité flexible (33) dans le récipient (30).

15. Procédé selon l'une quelconque des revendications 11 à 14, comprenant l'étape de pompage d'une substance de revêtement liquide jusqu'aux récipients (30) afin de fournir un écoulement ascendant dudit liquide dans les récipients (30).
